# EUROPEAN PATENT SPECIFICATION

(11) **EP 3 967 130 B1**
(45) Date of publication and mention of the grant of the patent: **27.03.2024**
(21) Application number: 21195449.0
(22) Date of filing: 08.09.2021
(51) Int. Cl.: A01D 51/00, A01D 46/00

(54) **HARVESTING MACHINE FOR HARVESTING FRUITS FROM THE GROUND AND METHOD OF CONTROL OF THE SAME**
ERNTEMASCHINE ZUM ERNTEN VON FRÜCHTEN VOM BODEN UND STEUERUNGSVERFAHREN DAFÜR
MACHINE DE RÉCOLTE POUR LA RÉCOLTE DE FRUITS AU SOL ET PROCÉDÉ DE COMMANDE DE CELLE-CI

(30) Priority: 10.09.2020 IT 202000021481
(43) Date of publication of application: 16.03.2022
(73) Proprietor: Monchiero & C. s.n.c., 12042 BRA (CN) (IT)
(72) Inventor: MONCHIERO, Massimo, 12042 BRA (CN) (IT); RINERO, Giancarlo, 12042 BRA (CN) (IT)
(74) Representative: Studio Torta S.p.A.

(56) References cited:
- ES-A1- 2 148 074
- FR-A1- 2 681 215
- FR-A1- 3 047 386

## Description

### CROSS-REFERENCE TO RELATED APPLICATIONS

This patent application claims priority from Italian patent application no. 102020000021481 filed on September 10, 2020.

### TECHNICAL FIELD

The invention relates to a harvesting machine for harvesting fruit from the ground.

### BACKGROUND OF THE INVENTION

In order to harvest fruit - such as chestnuts, hazelnuts, almonds apples, etc. - from the ground in a mechanized manner, motorised or non-motorised machines are known, which comprise a cart and a harvesting assembly, generally known as pickup, which projects forward relative to the cart and is coupled to the cart so as to be moved along a harvesting path, where it harvests the fruit and, together with it, a plurality of foreign bodies, which are mixed with or arranged around the fruit and are progressively removed from the fruit.

The different harvesting devices used nowadays all share the feature of having a rotary picking member, which can be a blade roller rotating around a horizontal axis or a conveyor belt with blades.

Regardless of how the picking member is made, the harvesting assembly comprises a frame of its own, which is provided with height position reference wheels rolling on the ground and is hinged to the cart by means of a coupling and control means, which is configured to allow, in some cases, for the sole static height adjustment during the machine set-up phase and, in other cases, also for a dynamic adjustment during the use of the machine.

The adjustment during the set-up phase allows the picking member to be placed at a predetermined height from the ground, whereas the dynamic adjustment allows the height of the picking member to be changed also during the harvesting, for example in order to deal with ground slope changes.

Known harvesting machines of the type described above, despite operating in an acceptable manner on flat and stable surfaces, turn out to be, in some cases, scarcely suited to operate on grounds with a small bearing capacity, such as wet or sandy grounds, since the wheels of the harvesting assembly, which are extremely narrower than the ones of the cart, sink into the ground, thus creating a jamming of the machine.

Other machines, on the other hand, are scarcely suited to operate on hard surfaces, since the wheels of the harvesting assembly tend to lift - or lighten - the front wheels of the cart, which tend to slip on the ground, thus often causing a skid of the cart from the expected harvesting trajectory.

In any case, known harvesting machines are relatively complex from a constructive point of view and in terms of costs both for manufacturing them and for the maintenance thereof, which are relatively high. This is mainly due to how the harvesting assembly is coupled and controlled.

Other harvesting machines are disclosed in documents ES2148074, FR2681215 and FR3047386.

### SUMMARY OF THE INVENTION

The object of the invention is to provide a harvesting machine which solves the problems discussed above in a simple and cost-effective fashion.

According to the invention, there is provided a harvesting machine for harvesting fruit from the ground according to claim 1.

The invention further relates to a method for controlling a harvesting machine for harvesting fruit from the ground.

According to the invention, there is provided a method for controlling a harvesting machine for harvesting fruit from the ground according to claim 9.

### BRIEF DESCRIPTION OF THE DRAWINGS

The invention will now be described with reference to the accompanying drawings, which show a non-limiting embodiment thereof, wherein:
figures 1 and 2 show, in side elevation and in plan view, respectively, a harvesting machine for harvesting fruit from the ground according to the invention; and
figure 3 is a block diagram of a hydraulic circuit of the harvesting machine of figures 1 and 2.

### DETAILED DESCRIPTION OF THE INVENTION

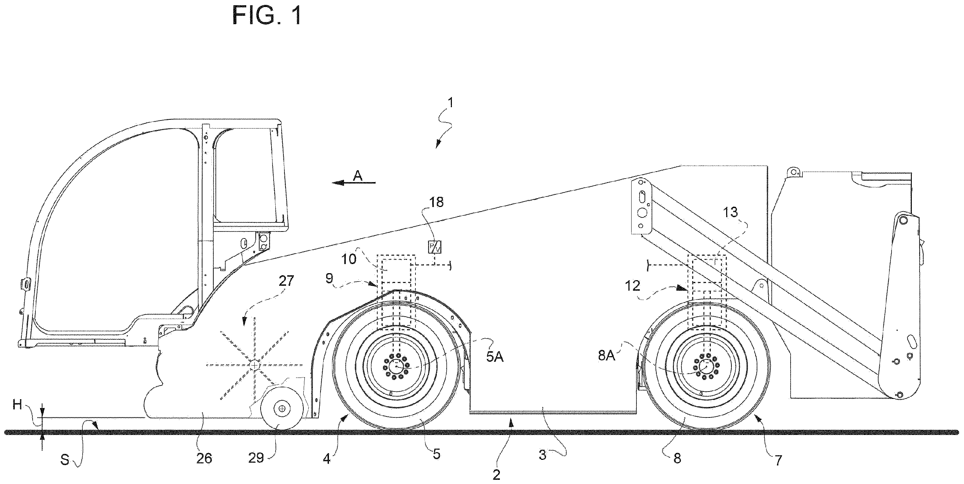

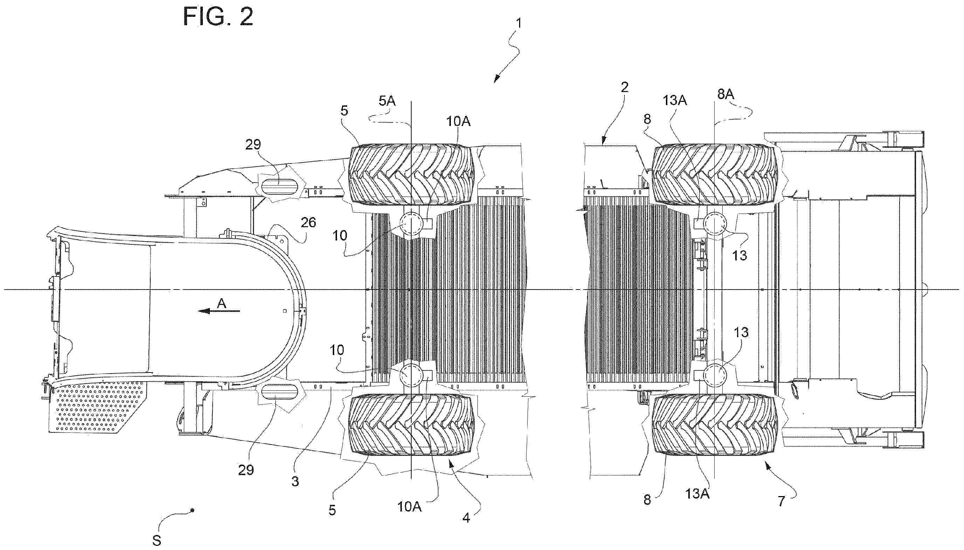

In figures 1 and 2, number 1 indicates, as a whole, a self-propelled harvesting machine for harvesting fruit from the ground, such as, for example, chestnuts, hazelnuts, almonds, apples, etc..

The machine 1 comprises a self-propelled or motorised cart 2, which is designed to be moved, in use, in a harvesting direction A and on a ground S on which there are both fruit to be harvested and foreign bodies, such as leaves, small branches, crushed stones, soil and dust in general.

The cart 2 comprises a frame 3 and, in the direction A, a front axle 4 having a pair of front wheels 5 rotating around a common fixed hinge axis 5A and a rear steering axle 7. The rear axle 7 comprises a pair of wheels 8 rotating around respective axes 8A.

According to a variant which is not shown herein, the front wheels 5 are steering wheels and the rear wheels 8 rotate around a common fixed axis.

According to a further variant, all wheels are fixed wheels and, according to a last variant, all four wheels are steering wheels.

Regardless of whether they are steering or fixed wheels, each front wheel 5 is coupled to the frame 3 by means of an adjustable suspension 9, which is schematically shown in figure 1 and comprises a hydraulic cylinder 10 to adjust the height of the frame 3 from the relative front wheel 5.

Similarly, each rear wheel 8 is coupled to the frame 3 by means of a relative adjustable suspension 12, which is schematically shown and comprises a respective rear hydraulic cylinder 13 to adjust the height of the frame 3 from the respective rear wheel 8.

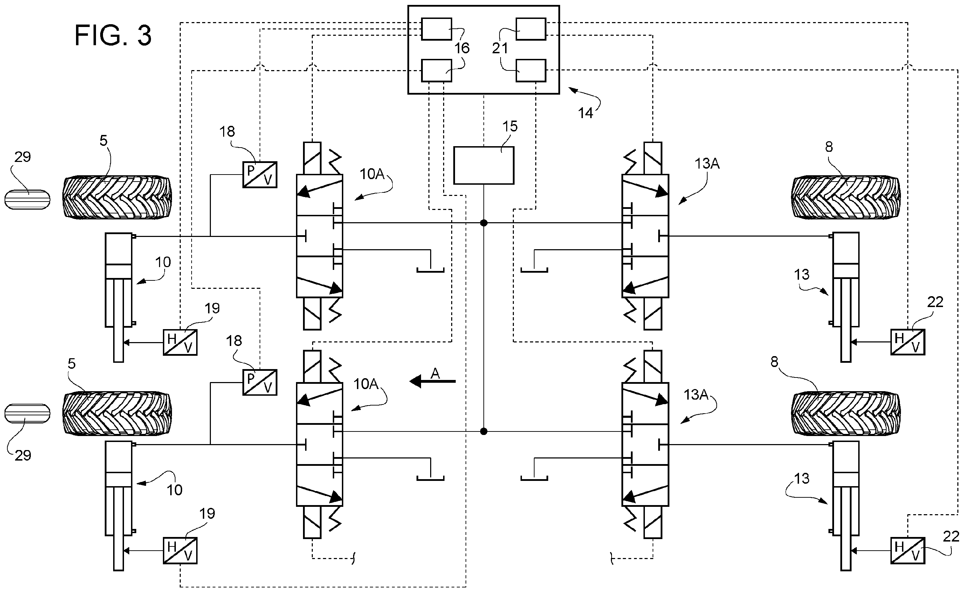

The front hydraulic cylinders 10 and the rear hydraulic cylinders 13 are controlled independently of one another by means of an electric-hydraulic command and control assembly indicated with 14 in figure 3.

With reference to figure 3, the assembly 14 comprises, for each front hydraulic cylinder 10, a corresponding hydraulic valve 10A, conveniently a solenoid valve with a continuous regulation, which is connected, on one side, to a hydraulic circuit feeding oil under pressure, which is schematically shown and indicated with 15, and, on the other side, to the relative hydraulic cylinder 10.

With reference to figure 3, again, for each solenoid valve 10A, the assembly 14 comprises a respective command and control bock 16, which is configured to control the respective solenoid valve 10A.

With reference to figure 3, again, the assembly 14 further comprises, for each front cylinder 10, a pressure detector 18 to detect the pressure in the chamber of the relative front cylinder 10, and a known position detector 19 to detect the stroke of the rod of the relative front cylinder 10 and, hence, the height of the frame 3 relative to the respective front wheel 5. The pressure detector 18 ad the position detector 19 of each front cylinder 10 are electrically connected to the relative command and control block 16.

With reference to figure 3, again, the assembly 14 comprises, for each rear hydraulic cylinder 13, a corresponding hydraulic valve 13A, conveniently a solenoid valve with a continuous regulation, which is connected, on one side, to the hydraulic circuit 15 feeding oil under pressure and, on the other side, to the relative hydraulic cylinder 13.

For each solenoid valve 13A, the assembly 14 comprises a respective command and control block 21, which is configured to control the respective solenoid valve 13A.

With reference to figure 3, again, the assembly 14 further comprises, for each rear cylinder 13, a known position detector 22 to detect the stroke of the rod of the relative rear cylinder 13 and, hence, the height of the frame 3 relative to the respective front wheel 5.

According to a variant which is not shown herein, the assembly 14 also comprises, for each one of the rear cylinders 13, a relative pressure detector to detect the pressure in a chamber of the rear cylinder 13 and connected to the respective block 21.

With reference to figures 1 and 2, again, the machine 1 comprises a known fruit harvesting device 25.

The harvesting device 25 comprises a frame 26 of its own, which is firmly connected to a front portion of the frame 3 of the cart 2. Conveniently, the frame 3 of the cart 2 and the frame 26 o the harvesting device 25 define one single frame, which is conveniently formed by a structural body manufactured as one single piece.

Alternatively, according to a different manufacturing solution the frame 3 and the frame 26 are firmly connected to one another by means of bolts or other equivalent quick coupling devices, so as to allow for machines that can be configured during the assembling phase.

In any case, the two frames 3 and 26 are firmly connected to one another so as to move together during the movement of the cart 2.

The frame 26 is coupled, in a known manner, to a harvesting member 27, which is also known and consists, in some cases, of a motorized blade roller and, in other cases, of a conveyor belt.

Regardless of the type of harvesting member 27, the frame 26 carries, coupled to it, two support and positioning wheels 29, which are designed to roll on the ground and place the harvesting member 27 at a given height H from the ground.

The support wheels 29, which have a much smaller width than the wheels 5 or 6, in some cases amounting to approximately one hundred and fifty millimetres, can be coupled to the frame in a fixed lowered position or their distance from the frame 26 can be changed during the set-up phase of the machine 1 in order to then remain the same throughout the harvesting operation.

The operation of the machine 1 will now be described starting from the condition shown in figure 1, in which the command and control assembly 14 keeps the machine 1 in an ideal harvesting condition, in which all wheels 5,8 and 29 rest on the ground S, namely lie on a common support plane, so as to hold the harvesting member 27 at the expected height H from the ground and distribute the weight of the machine 1 on the wheels 5,8 and 29.

During the harvesting process, the assembly 14, through the pressure detectors 18, continuously detects the change in the pressure on the inside of at least one of the front cylinders 10 or, conveniently, of both front cylinders 10 and, by means of the relative blocks 16, controls the solenoid valves 10A, which, as the pressure increases due, for example, to a sinking of the wheels 29 into the ground, extend the front cylinders 10, thus lifting the front part of the frame 3 and, together with it, the frame 26 and, hence, the entire harvesting device 25.

During said lifting, the blocks 21 keep the rear cylinders 13 locked or still and, hence, the height of the frame 3 from the rear wheels 8 remains constant.

In this way, the wheels 29 are brought back onto the ground and, as a consequence, the harvesting member 27 is back at the expected harvesting height H.

The lifting is allowed by the fact that, under conditions of small bearing capacity of the ground, the front wheels 5 of the cart 2 sink into the ground much less than the wheels 29 or do not sink into the ground at all, since they have a much greater width than the wheels 29. Therefore, it is evident that the lifting of the wheels 29 back onto the ground avoids any jamming of the wheels 29 as well as abnormal stresses of the frame while steering and changing direction.

On the other hand, a reduction in the pressure on the inside of the front cylinders 10, which can be caused, for example, by the thrust inevitably exerted by the wheels 29 on the frame 3 in the presence of a very hard ground, is reduced or zeroed by the blocks 16 controlling the solenoid valves 10A so as to increase the pressure in the front cylinders 10 and, hence, the load acting upon the front wheels 5.

By increasing the pressure, the load acting upon the wheels 29 is reduced and the load acting upon the front wheels 5 is increased, thus restoring the grip of the front wheels 5 and avoiding skids of the machine due to a lack of grip of the front wheels 5, especially in the presence of winding paths.

In addition, the unloading of the wheels 29 eliminates, from the very beginning, the generation of abnormal stresses acting upon the frame 3,26 of the machine 1.

In this operating condition, the rear cylinders 13 are kept locked or still by relative blocks 21, as well.

In any case, the intervention of the assembly 14 following the change in the pressure on the inside of the front cylinders 10 causes an oscillation or a rotation of the entire frame 3 around an instantaneous rotation axis, which is transverse to the moving direction A. Conveniently, the instantaneous rotation axis of the frame 3 is orthogonal to the moving path of the machine and/or parallel to the axis of one of the axles 4,7 or to the rotation axes of the wheels 5,8.

According to a different control mode, following the detection of a change in the pressure of the front cylinders 10, the rear cylinders 13 are adjusted by the relative blocks 21, as well. In this way, the height of the frame 3 is changed not only relative to the front wheels 5, but also relative to the rear wheels 5 and, hence, the instantaneous rotation axis can be placed in any point between the front axle 4 and the rear axle 7, chosen so as to ensure an ideal harvesting of the device 25.

In this condition, again, the combination of the lifting of the frame 3 relative to both axles 4 and 7 allows the pushing action exchanged between the wheels 29 and the ground to be adjusted, thus keeping the wheels 29 on the ground and the harvesting member 27 at the predetermined height H, whatever the conditions of the ground on which the machine 1 is operating.

Furthermore, the harvesting member 27 is held at the predetermined height H without exerting concentrated stresses upon the frame or the cart 2 or the harvesting device 25.

Owing to the above, it is evident that, compared to known solutions, the machine 1 described herein is, for all intents and purposes, a machine having one single frame shared by the cart 2 and by the harvesting device 25, so that it is simple and cost-effective to be manufactured, easy to be controlled and ensures high stability and high functional efficiency.

This is basically due to the fact that the two frames 3 and 26 are firmly connected to one another and, in particular, are defined by a body manufactured as one single piece.

Besides, in the machine 1, the control of the height H of the harvesting member 27 from the ground is evidently carried out using, as actuators, the hydraulic cylinders intended for the adjustment of the suspensions 9 and 12 of the cart 2, thus eliminating all other actuators currently necessary for the adjustment of the position of the frame 26 or of the picking member 27 relative to the frame of the cart moving it.

Owing to the above, it is evident that single-frame machine 1 described herein can be subjected to changes and variants, without for this reason going beyond the scope of protection set forth by the invention.

In particular, the rear axle 7 could lack a height-adjustable suspension and the frame 3 could be coupled to the rear axle 7 in a vertically fixed position.

Furthermore, the wheels 29 could be replaced by other support and positioning members, for example blocks sliding on the ground or equivalent systems for the detection of the height H of the harvesting member 27 from the ground. A correct and non-varying height of the harvesting member 27 from the ground is necessary to carry out a continuous harvesting process, on the one hand, and to avoid a crushing or violent contact of the harvesting member 27 against the ground during the movement of the cart 2 along grounds with slope changes.

In addition, the cart 2 could not be a self-propelled cart, namely a motorised cart, but be a towed cart, hence provided with a towing bar or with another equivalent member to couple it to a tractor.

Besides, the cart 2 could comprise a number of wheels other than the one indicated herein by way of example. In particular, the cart 2 could be of the tricycle type, namely with three wheels, for example, though not necessarily, two front wheels and a rear wheel.

Furthermore, the hydraulic actuators 10 and 13 could be replaced by pneumatic actuators and, consequently, the electric-hydraulic circuit could be replaced by an electric-pneumatic circuit.

## Claims

1. A harvesting machine (1) for harvesting fruits from the ground, the machine (1) comprising a cart (2) comprising a first frame (3); a front axle (4) comprising at least one front-wheel (5); a front suspension (9) for coupling the front-wheel (5) to the first frame (3) and comprising a front actuator (10); and a rear axle (7) comprising at least one rear-wheel (8) coupled to the first frame (3); the machine (1) furthermore comprising a fruit harvesting device (25), in turn, comprising a second frame (26), a movable member (27) for picking up the fruits from the ground and coupled to said second frame (26), and at least one reference member (29) configured to keep said picking member (27) at a predefined height from the ground; the harvesting machine (1) being **characterised in that** said first (3) and second frames (26) are firmly connected to one another to move in unison, and **in that** said front suspension (9) is a suspension adjustable in height and said front actuator (10) is configured to move said first frame (3) from and towards said front-wheel (5) and **in that** it comprises a command and control unit (14) for said front actuator (10); the command and control unit (14) comprising pressure detection means (18) for detecting the pressure in at least one chamber of said front actuator (10) and command and control means (16) configured to command said front actuator (10) according to said detected pressure and to rotate said first frame (3) around an instantaneous rotation axis transverse to an advancing direction (A) of the cart (2) and to adjust the load on said reference member (29) and on said front-wheel (5).

2. The harvesting machine according to claim 1, **characterised in that** said front axle (4) comprises two front-wheels (5) and, for each said front-wheel (5), a respective front suspension (9) adjustable in height and having its own front actuator (10); said command and control unit (14) being configured to control both said front actuator (10) according to the pressure in said chamber.

3. The harvesting machine according to claim 1 or 2, **characterised in that** said instantaneous rotation axis is parallel to a rotation axis of one of said axles (4) ; (7) .

4. The harvesting machine according to one of the preceding claims, **characterised in that** said instantaneous rotation axis coincides with the rotation axis of one of said wheels (5);(8).

5. The harvesting machine according to one of the preceding claims, **characterised in that** said instantaneous rotation axis coincides with the rotation axis of said rear-wheel (8).

6. The harvesting machine according to any one of the preceding claims, **characterised in that** it comprises a rear suspension (12) adjustable in height for adjusting the position of the first frame (3) relative to said rear-wheel (8); the rear suspension (12) having a rear actuator (13) and **in that** said command and control unit (14) comprises further command and control means (21) configured to command said rear actuator (13)simultaneously or independently of the front actuator (10) .

7. The harvesting machine according to claim 6, **characterised in that** said further command and control means (21) are configured to lock said rear actuator (13) in a reference position during the command of said front actuator (10).

8. The harvesting machine according to claim 6, **characterised in that** said further command and control means (21) are configured to vary the height of said first frame (3) relative to said rear-wheel (8) independently of the adjustment in height of said first frame (3) relative to said front-wheel (5).

9. A method for controlling a harvesting machine (1) for harvesting fruits from the ground, as claimed in the preceding claims, the method comprising the steps of advancing the cart (2) in a fruit harvesting direction (A) and harvesting the fruits by means of the picking member (27), **characterised in that** it detects the pressure in at least one chamber of the front actuator (10) and commands the front actuator (10) so as to rotate the first frame (3) around an instantaneous rotation axis transverse to said advancing direction (A) and adjusts the load on the reference member (29) and on the front-wheel (5).

10. The method according to claim 9, **characterised in that** the rotation of the first frame (3) around the instantaneous rotation axis is carried out by rotating the first frame (3) around a rotation axis parallel to the rotation axis of one of the axles (4);(7).

11. The method according to claim 9, **characterised in that** the rotation of the first frame (3) around the instantaneous rotation axis is carried out by adjusting the position in height of the first frame (3) relative to the front-wheel (5) and keeping the height of the first frame (3) fixed relative to the rear-wheel (8).

12. The method according to claim 9, **characterised in that** the rotation of the first frame (3) around the instantaneous rotation axis is carried out by adjusting the position in height of the first frame (3) relative to the front-wheel and the height of the first frame (3) relative to the rear-wheel (8).

## Patentansprüche

1. Eine Erntemaschine (1) zum Ernten von Früchten vom Boden, wobei die Maschine (1) einen Wagen (2) umfasst, der einen ersten Rahmen (3) aufweist; eine Vorderachse (4) mit wenigstens einem Vorderrad (5); eine Vorderradaufhängung (9) zum Koppeln des Vorderrads (5) mit dem ersten Rahmen (3) und mit einem vorderen Aktuator (10); und eine Hinterachse (7), die wenigstens ein Hinterrad (8) umfasst, das mit dem ersten Rahmen (3) gekoppelt ist; wobei die Maschine (1) außerdem eine Obsterntevorrichtung (25) aufweist, die wiederum einen zweiten Rahmen (26), ein bewegliches Element (27) zum Pflücken der Früchte vom Boden, das mit dem zweiten Rahmen (26) verbunden ist, und wenigstens ein Referenzelement (29) umfasst, das so konfiguriert ist, dass es das Pflückelement (27) auf einer vordefinierten Höhe über dem Boden hält; wobei die Erntemaschine (1) **dadurch gekennzeichnet ist, dass** der erste (3) und der zweite Rahmen (26) fest miteinander verbunden sind, um sich gemeinsam zu bewegen, und dass die Vorderradaufhängung (9) eine höhenverstellbare Aufhängung ist und der vordere Aktuator (10) so konfiguriert ist, dass er den ersten Rahmen (3) vom und zum Vorderrad (5) bewegt und dadurch, dass sie eine Befehls- und Steuereinheit (14) für den vorderen Aktuator (10) umfasst; wobei die Befehls- und Steuereinheit (14) Druckerfassungsmittel (18) zum Erfassen des Drucks in wenigstens einer Kammer des vorderen Aktuators (10) und Befehls- und Steuermittel (16) umfasst, die derart konfiguriert sind, um den vorderen Aktuator (10) entsprechend dem erfassten Druck zu steuern und den ersten Rahmen (3) um eine momentane Drehachse, quer zu einer Vorwärtsrichtung (A) des Wagens (2), zu drehen und die Last auf das Referenzelement (29) und auf das Vorderrad (5) einzustellen.

2. Erntemaschine nach Anspruch 1, **dadurch gekennzeichnet, dass** die Vorderachse (4) zwei Vorderräder (5) und für jedes Vorderrad (5) eine jeweilige höhenverstellbare Vorderradaufhängung (9) mit ihrem eigenen vorderen Aktuator (10) aufweist; wobei die Befehls- und Steuereinheit derart konfiguriert ist, dass sie beide vorderen Aktuatoren (10) entsprechend dem Druck in der Kammer steuert.

3. Erntemaschine nach Anspruch 1 oder 2, **dadurch gekennzeichnet, dass** die momentane Drehachse parallel zu einer Drehachse einer der Achsen (4); (7) ist.

4. Erntemaschine nach einem der vorstehenden Ansprüche, **dadurch gekennzeichnet, dass** die momentane Drehachse mit der Drehachse eines der Räder (5); (8) zusammenfällt.

5. Erntemaschine nach einem der vorherstehenden Ansprüche, **dadurch gekennzeichnet, dass** die momentane Drehachse mit der Drehachse des Hinterrads (8) zusammenfällt.

6. Erntemaschine nach einem der vorstehenden Ansprüche, **dadurch gekennzeichnet, dass** sie eine höhenverstellbare Hinterradaufhängung (12) zum Einstellen der Position des ersten Rahmens (3) relativ zu dem Hinterrad (8) umfasst; wobei die Hinterradaufhängung (12) einen hinteren Aktuator (13) aufweist und dass die Befehls- und Steuereinheit (14) weitere Befehls- und Steuermittel (21) umfasst, die derart konfiguriert sind, dass sie den hinteren Aktuator (13) gleichzeitig oder unabhängig vom vorderen Aktuator (10) steuern.

7. Erntemaschine nach Anspruch 6, **dadurch gekennzeichnet, dass** die weiteren Befehls- und Steuermittel (21) derart konfiguriert sind, dass sie den hinteren Aktuator (13) während des Befehls des vorderen Aktuators (10) in einer Referenzposition arretieren.

8. Erntemaschine nach Anspruch 6, **dadurch gekennzeichnet, dass** die weiteren Befehls- und Steuermittel (21) derart konfiguriert sind, dass sie die Höhe des ersten Rahmens (3) relativ zu dem Hinterrad (8) unabhängig von der Höhenverstellung des ersten Rahmens (3) relativ zu dem Vorderrad (5) variieren.

9. Verfahren zur Steuerung einer Erntemaschine (1) zum Ernten von Früchten vom Boden nach einem der vorstehenden Ansprüche, wobei das Verfahren die Schritte des Vorrückens des Wagens (2) in eine Obsternterichtung (A) und des Erntens der Früchte mittels des Pflückelements (27) umfasst, **dadurch gekennzeichnet, dass** es den Druck in mindestens einer Kammer des vorderen Aktuators (10) erfasst und dem vorderen Aktuator (10) befiehlt, den ersten Rahmen (3) um eine momentane Drehachse, quer zu der Vorwärtsrichtung (A), zu drehen und die Last auf das Referenzelement (29) und auf das Vorderrad (5) einstellt.

10. Verfahren nach Anspruch 9, **dadurch gekennzeichnet, dass** die Drehung des ersten Rahmens (3) um die momentane Drehachse durch Drehen des ersten Rahmens (3) um eine Drehachse parallel zur Drehachse einer der Achsen (4); (7) erfolgt.

11. Verfahren nach Anspruch 9, **dadurch gekennzeichnet, dass** die Drehung des ersten Rahmens (3) um die momentane Drehachse durch Einstellen der Höhenposition des ersten Rahmens (3) relativ zu dem Vorderrad (5) und Beibehalten der Höhe des ersten Rahmens (3) fest relativ zu dem Hinterrad (8) erfolgt.

12. Verfahren nach Anspruch 9, **dadurch gekennzeichnet, dass** die Drehung des ersten Rahmens (3) um die momentane Drehachse durch Einstellen der Höhenposition des ersten Rahmens (3) relativ zu dem Vorderrad und der Höhe des ersten Rahmens (3) relativ zu dem Hinterrad (8) erfolgt.

## Revendications

1. Machine de récolte (1) pour récolter des fruits au sol, la machine (1) comprenant un chariot (2) comprenant un premier châssis (3) ; un essieu avant (4) comprenant au moins une roue avant (5) ; une suspension avant (9) pour coupler la roue avant (5) au premier châssis (3) et comprenant un actionneur avant (10) ; et un essieu arrière (7) comprenant au moins une roue arrière (8) couplée au premier châssis (3) ; la machine (1) comprenant en outre un dispositif de récolte de fruits (25), comprenant à son tour, un deuxième châssis (26), un élément mobile (27) pour prélever les fruits au sol et couplé audit deuxième châssis (26), et au moins un élément de référence (29) configuré pour maintenir ledit élément de prélèvement (27) à une hauteur prédéfinie du sol ; la machine de récolte (1) étant **caractérisée en ce que** lesdits premier (3) et deuxième châssis (26) sont fermement raccordés entre eux pour se déplacer à l'unisson, et **en ce que** ladite suspension avant (9) est une suspension réglable en hauteur et ledit actionneur avant (10) est configuré pour déplacer ledit premier châssis (3) de et vers ladite roue avant (5) et **en ce qu'**elle comprend une unité de commande et de contrôle (14) pour ledit actionneur avant (10) ; l'unité de commande et de contrôle (14) comprenant des moyens de détection de pression (18) pour détecter la pression dans au moins une chambre dudit actionneur avant (10) et des moyens de commande et de contrôle (16) configurés pour commander ledit actionneur avant (10) en fonction de ladite pression détectée et pour faire tourner ledit premier châssis (3) autour d'un axe de rotation instantané transversal par rapport à une direction d'avancement (A) du chariot (2) et pour ajuster la charge sur ledit élément de référence (29) et sur ladite roue avant (5).

2. Machine de récolte selon la revendication 1, **caractérisée en ce que** ledit essieu avant (4) comprend deux roues avant (5) et pour chacune desdites roues avant (5), une suspension avant (9) respective réglable en hauteur et ayant son propre actionneur avant (10) ; ladite unité de commande et de contrôle (14) étant configurée pour contrôler les deux desdits actionneurs avant (10) en fonction de la pression dans ladite chambre.

3. Machine de récolte selon la revendication 1 ou 2, **caractérisée en ce que** ledit axe de rotation instantané est parallèle à un axe de rotation de l'un desdits essieux (4) ; (7).

4. Machine de récolte selon l'une des revendications précédentes, **caractérisée en ce que** ledit axe de rotation instantané coïncide avec l'axe de rotation de l'une desdites roues (5) ; (8).

5. Machine de récolte selon l'une des revendications précédentes, **caractérisée en ce que** ledit axe de rotation instantané coïncide avec l'axe de rotation de ladite roue arrière (8).

6. Machine de récolte selon l'une quelconque des revendications précédentes, **caractérisée en ce qu'**elle comprend une suspension arrière (12) réglable en hauteur pour régler la position du premier châssis (3) par rapport à ladite roue arrière (8) ; la suspension arrière (12) ayant un actionneur arrière (13) et **en ce que** ladite unité de commande et de contrôle (14) comprend des moyens de commande et de contrôle supplémentaires (21) configurés pour commander ledit actionneur arrière (13) simultanément ou indépendamment de l'actionneur avant (10).

7. Machine de récolte selon la revendication 6, **caractérisée en ce que** lesdits moyens de commande et de contrôle supplémentaires (21) sont configurés pour bloquer ledit actionneur arrière (13) dans une position de référence pendant la commande dudit actionneur avant (10).

8. Machine de récolte selon la revendication 6, **caractérisée en ce que** lesdits moyens de commande et de contrôle supplémentaires (21) sont configurés pour modifier la hauteur dudit premier châssis (3) par rapport à ladite roue arrière (8) indépendamment du réglage en hauteur dudit premier châssis (3) par rapport à ladite roue avant (5).

9. Procédé pour contrôler une machine de récolte (1) pour récolter des fruits au sol, selon les revendications précédentes, le procédé comprenant les étapes d'avancement du chariot (2) dans une direction de récolte de fruits (A) et de récolte des fruits au moyen de l'élément de prélèvement (27), **caractérisé en ce qu'**il détecte la pression dans au moins une chambre de l'actionneur avant (10) et commande l'actionneur avant (10) afin de faire tourner le premier châssis (3) autour d'un axe de rotation instantané transversal par rapport à ladite direction d'avancement (A) et règle la charge sur l'élément de référence (29) et sur la roue avant (5).

10. Procédé selon la revendication 9, **caractérisé en ce que** la rotation du premier châssis (3) autour de l'axe de rotation instantané est réalisée en faisant tourner le premier châssis (3) autour d'un axe de rotation parallèle à l'axe de rotation de l'un des essieux (4) ; (7).

11. Procédé selon la revendication 9, **caractérisé en ce que** la rotation du premier châssis (3) autour de l'axe de rotation instantané est réalisée en réglant la position en hauteur du premier châssis (3) par rapport à la roue avant (5) et en maintenant la hauteur du premier châssis (3) fixe par rapport à la roue arrière (8).

12. Procédé selon la revendication 9, **caractérisé en ce que** la rotation du premier châssis (3) autour de l'axe de rotation instantané est réalisée en ajustant la position en hauteur du premier châssis (3) par rapport à la roue avant et la hauteur du premier châssis (3) par rapport à la roue arrière (8).
